# EUROPEAN PATENT APPLICATION

(11) **EP 4 832 185 A1**
(43) Date of publication of application: **28.10.2026**
(21) Application number: 24907256.2
(22) Date of filing: 10.12.2024
(51) Int. Cl.: H01M 50/204, H01M 10/613, H01M 10/625, H01M 10/627, H01M 10/643, H01M 10/6235, H01M 10/6556, H01M 10/6563, H01M 50/59, H01M 50/213, H01M 50/284, H01M 50/505, H01M 50/548, H01M 50/588, H01M 50/595

(54) **POWER SUPPLY DEVICE AND METHOD FOR MANUFACTURING SAME**

(30) Priority: 22.12.2023 JP 2023217362
(71) Applicant: Panasonic Intellectual Property Management Co., Ltd., Kadoma-shi, Osaka 571-0057 (JP)
(72) Inventor: KANKAKU Mai, Kadoma-shi, Osaka 571-0057 (JP); OOTURU Toshiya, Kadoma-shi, Osaka 571-0057 (JP); KAWAKAMI Satoshi, Kadoma-shi, Osaka 571-0057 (JP)
(74) Representative: Eisenführ Speiser
(86) International application number: PCT/JP2024/043700
(87) International publication number: WO 2025/134871

(57) **Abstract**

A power supply device includes: a plurality of secondary battery cells each having cell end faces on which electrodes are provided; one or more battery blocks that house the plurality of secondary battery cells; and an exterior case that houses the one or more battery blocks. In each battery block of the one or more battery blocks, a cooling air path through which cooling air flows is defined between an inner surface of the battery block and a surface of a cell intermediate region of each of the plurality of secondary battery cells housed in the battery block, the cell intermediate region being located between two end regions contiguous with the respective cell end faces. The exterior case includes an external opening portion that communicates with the cooling air path. The power supply device further includes one or more electrode waterproof portions each of which is interposed between the battery block and a corresponding cell end face of a secondary battery cell among the plurality of secondary battery cells housed in the battery block, to prevent water from the cooling air path from reaching a corresponding electrode of the secondary battery cell.

## Description

### TECHNICAL FIELD

The present disclosure relates to a power supply device and a method for manufacturing the power supply device.

### BACKGROUND ART

A power supply device having a plurality of rechargeable secondary battery cells such as a lithium ion secondary battery connected in series or in parallel and housed in an exterior case is used for driving an electric device such as an electric tool or driving an electric moving body, such as a vehicle or a construction machine (for example, PTL 1). Since the secondary battery cell used in such a power supply device generates heat by charging and discharging, it is necessary to cool the secondary battery cell. For this reason, in order to cool the secondary battery cell by air cooling, while a cooling air flow path for allowing cooling air to flow is formed between the secondary battery cells, an opening is provided in the exterior case and caused to communicate with the cooling flow path.

On the other hand, a power supply device or the like used outdoors is required to have waterproofness. For this reason, it is necessary to prevent occurrence of an unintended short circuit inside due to water ingress from the outside while providing an opening for taking in cooling air from the outside in the exterior case, and a complicated structure has been required in order to implement conflicting characteristics.

### Citation List

### Patent Literature

PTL 1: International Publication Pamphlet No. WO2017/175487

### SUMMARY OF THE INVENTION

An object of an aspect of the present disclosure is to provide a power supply device capable of cooling a secondary battery cell while ensuring waterproof performance of the secondary battery cell, and a method for manufacturing the power supply device. Moreover, an object of another aspect is to provide a novel power supply device and a method for manufacturing the power supply device. Note that the description of these objects and problems in the present disclosure does not preclude the existence of other objects and problems. Moreover, one aspect of the present disclosure is not required to solve all of these problems. Further, problems other than these problems can be extracted from the description, drawings, and claims of the present disclosure.

A power supply device according to an aspect of the present disclosure is a power supply device that includes: a plurality of secondary battery cells each having cell end faces on which electrodes are provided; one or more battery blocks that house the plurality of secondary battery cells; and an exterior case that houses the one or more battery blocks, wherein, in each battery block of the one or more battery blocks, a cooling air path through which cooling air flows is defined between an inner surface of the battery block and a surface of a cell intermediate region of each of the plurality of secondary battery cells housed in the battery block, the cell intermediate region being located between two end regions contiguous with the respective cell end faces, the exterior case includes an external opening portion that communicates with the cooling air path, and the power supply device further includes one or more electrode waterproof portions each of which is interposed between the battery block and a corresponding cell end face of a secondary battery cell among the plurality of secondary battery cells housed in the battery block, to prevent water from the cooling air path from reaching a corresponding electrode of the secondary battery cell.

Moreover, a method for manufacturing a power supply device according to another aspect is a method for manufacturing a power supply device that includes a plurality of secondary battery cells each having cell end faces on which electrodes are provided, one or more battery blocks that house the plurality of secondary battery cells, and an exterior case that houses the one or more battery blocks. The method includes: preparing one or more battery blocks, each of which includes one or more electrode windows for respectively exposing the electrodes of the plurality of secondary battery cells; fixing, in each of the one or more battery blocks, one or more electrode waterproof portions, each electrode waterproof portion being fixed to a portion of the battery block surrounding a corresponding electrode window and to a corresponding cell end face of a secondary battery cell such that a corresponding electrode of the secondary battery cell is exposed through the corresponding electrode window; connecting a lead plate to the corresponding electrode through the corresponding electrode window; and housing the one or more battery blocks in the exterior case, and causing a cooling air path through which cooling air flows to communicate with an external opening portion provided in the exterior case, the cooling air path defined, in each battery block of the one or more battery blocks, between an inner surface of the battery block and a surface of a cell intermediate region of each of the plurality of secondary battery cells housed in the battery block, the cell intermediate region being located between two end regions contiguous with the respective cell end faces.

According to the power supply device and the method for manufacturing the power supply device according to the aspects of the present disclosure, it is possible to waterproof the electrode by the electrode waterproof portion provided between the cell end face of the secondary battery cell and the battery block while performing cooling by flowing the cooling air to the cell intermediate region, and it is possible to maintain a necessary waterproof structure while opening the external opening portion in the exterior case for cooling.

### BRIEF DESCRIPTION OF THE DRAWINGS

Fig. 1 is a perspective view illustrating a power supply device according to a first exemplary embodiment.
Fig. 2 is a perspective view of the power supply device of Fig. 1 as viewed obliquely from below on a rear side.
Fig. 3 is an exploded perspective view in which an upper case of the power supply device of Fig. 1 is disassembled.
Fig. 4 is a further exploded perspective view of the power supply device of Fig. 3.
Fig. 5 is an exploded perspective view of the power supply device of Fig. 2.
Fig. 6 is a cross-sectional view taken along line VI-VI of the power supply device of Fig. 1.
Fig. 7 is an exploded perspective view of a battery module of Fig. 4.
Fig. 8 is an exploded perspective view in which a lead plate is disassembled from one battery block of Fig. 7.
Fig. 9 is an exploded perspective view of one holder case of Fig. 8.
Fig. 10 is a further exploded perspective view of a holder case of Fig. 9.
Fig. 11 is an exploded perspective view illustrating a state where an electrode waterproof portion is set in a holder side surface case of Fig. 9.
Fig. 12 is a cross-sectional view taken along line XII-XII of the battery block of Fig. 1.
Fig. 13 is a cross-sectional view taken along line XIII-XIII of the battery block of Fig. 7.
Fig. 14 is an enlarged cross-sectional view of a main part of the battery block of Fig. 13.
Fig. 15 is a cross-sectional perspective view taken along line XV-XV of the power supply device of Fig. 1.
Fig. 16 is a cross-sectional perspective view taken along line XVI-XVI of the power supply device of Fig. 1.

### DESCRIPTION OF EMBODIMENT

An exemplary embodiment of the present disclosure may also be specified by the following configurations and features.

In any of the above aspects, in a power supply device according to another aspect of the present disclosure, the battery block includes one or more electrode windows each of which is located at a position facing the corresponding cell end face of the secondary battery cell to expose the corresponding electrode of the secondary battery cell, the one or more electrode waterproof portions are annular members, each of the one or more electrode waterproof portions includes a first face that is fixed to a peripheral portion of the battery block surrounding a corresponding electrode window of the one or more electrode windows, and a second face that is fixed to the corresponding cell end face of the secondary battery cell in the battery block, and the corresponding electrode of the secondary battery cell is disposed inside a corresponding one of the annular members, and is exposed through the corresponding electrode window of the battery block. With the above configuration, the electrode can be exposed to achieve electrical connection while the electrode waterproof portion is fixed between the cell end face of the secondary battery cell and the battery block.

Moreover, in any of the above aspects, a power supply device according to another aspect of the present disclosure further includes a lead plate connected to the corresponding electrode through the corresponding electrode window. With the above configuration, it is possible to waterproof the electrode with the annular electrode waterproof portion while securing the region connecting the lead plate and the electrode.

Further, in any of the above aspects, a power supply device according to another aspect of the present disclosure further includes a circuit board electrically connected to the plurality of secondary battery cells via the lead plate. A waterproof space is defined by a waterproof structure between an inner surface of the exterior case and outer surfaces of the one or more battery blocks, and the circuit board is disposed in the waterproof space to be protected from water ingress.

Furthermore, in any of the above aspects, in a power supply device according to another aspect of the present disclosure, the one or more electrode waterproof portions each include a waterproof double-sided tape.

Furthermore, in any of the above aspects, in a power supply device according to another aspect of the present disclosure, each of the one or more battery blocks includes a holder upper opening portion that communicates with the cooling air path. The holder upper opening portion communicates with the external opening portion.

Furthermore, in any of the above aspects, in a power supply device according to another aspect of the present disclosure, the exterior case includes a partition portion that holds the one or more battery blocks inside the exterior case. The partition portion defines a partition opening that exposes an end of the cooling air path, the partition opening communicating with the external opening portion. A first sealing portion is provided between a periphery of the partition opening and a periphery of the cooling air path.

Furthermore, in any of the above aspects, in a power supply device according to another aspect of the present disclosure, a second sealing portion is provided between a periphery of the partition portion and an inner surface of the exterior case.

Furthermore, in any of the above aspects, in a power supply device according to another aspect of the present disclosure, the exterior case includes, as the external opening portion, an external first opening and an external second opening located in part of a surface of the exterior case, the external first opening allowing the cooling air path to communicate with an outside.

A third sealing portion is provided between a periphery of the external first opening and the periphery of the cooling air path, to waterproof the one or more battery blocks.

The external second opening communicates with the partition opening.

Furthermore, in any of the above aspects, in a power supply device according to another aspect of the present disclosure, each of the plurality of secondary battery cells includes a cylindrical exterior can.

The one or more electrode waterproof portions include, for each of the plurality of secondary battery cells, a pair of electrode waterproof portions respectively fixed to two cell end faces at opposite ends of the cylindrical exterior can.

Furthermore, in any of the above aspects, in a power supply device according to another aspect of the present disclosure, each of the one or more battery blocks includes divided members, each of which covers a corresponding one of the end regions in each of the plurality of secondary battery cells housed in the battery block.

Furthermore, in any of the above aspects, in a power supply device according to another aspect of the present disclosure, the battery block does not cover the cell intermediate region. The cell intermediate region is exposed to the cooling air path. With the above configuration, the cell intermediate region of each secondary battery cell is exposed to the cooling air path, and thus, the cooling air is brought into direct contact with the cell intermediate region. As a result, heat exchange can be efficiently performed.

Furthermore, in any of the above aspects, in a power supply device according to another aspect of the present disclosure, the one or more battery blocks are a pair of battery blocks arranged adjacent to each other.

Hereinafter, an exemplary embodiment of the present disclosure will be described with reference to the drawings. However, the exemplary embodiment to be described below is an example for embodying the technical idea of the present disclosure, and the present disclosure is not limited to the exemplary embodiment described below. Further, in the present specification, members indicated in the claims are not limited to the members of the exemplary embodiment. In particular, dimensions, materials, shapes, relative arrangements, and the like of components described in the exemplary embodiment are not intended to limit the scope of the present disclosure exclusively unless otherwise specified, and are merely illustrative examples. Note that sizes and positional relationships of members illustrated in each drawing may be exaggerated to clarify the explanation. Further, in the following description, the same names and reference marks indicate the same or similar members, and detailed description thereof will be omitted as appropriate. Further, each element constituting the present disclosure may include an aspect in which a plurality of elements are constituted by one member and the one member serves as the plurality of elements, or conversely, a function of one member may be shared and implemented by a plurality of members.

The power supply device of the present disclosure can be used as a power source of a portable electric device such as an electric tool or an electric cleaner, as a power source for driving a moving body such as an electric cart, an electric scooter, or a power-assisted bicycle, as a power source for backup of a server or a power supply device for home use, business use, or factory use for stationary power storage, or as a power source for driving a vehicle such as a hybrid vehicle or an electric vehicle. Hereinafter, a power supply device used as a power source for driving an electric tool will be described as an exemplary embodiment of the present invention.

### [First exemplary embodiment]

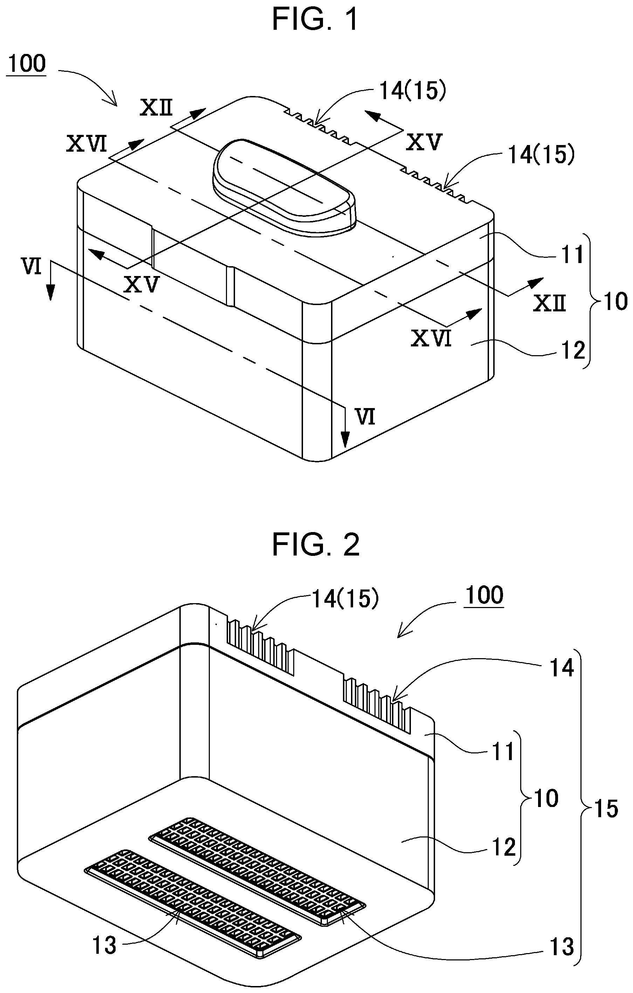

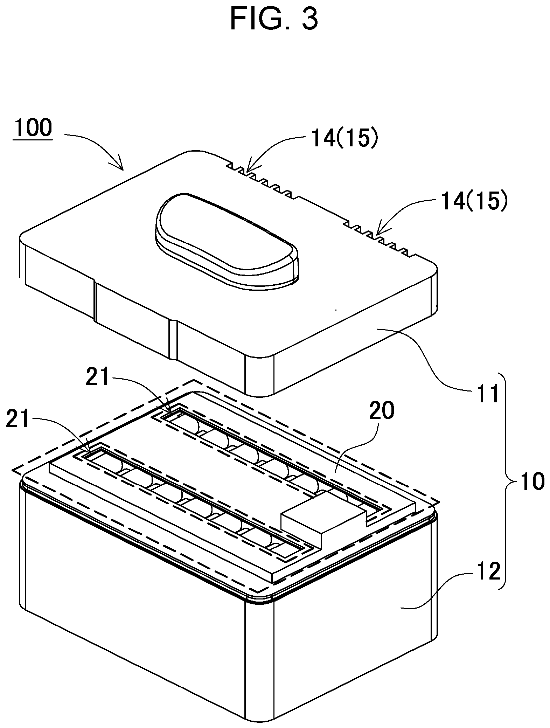

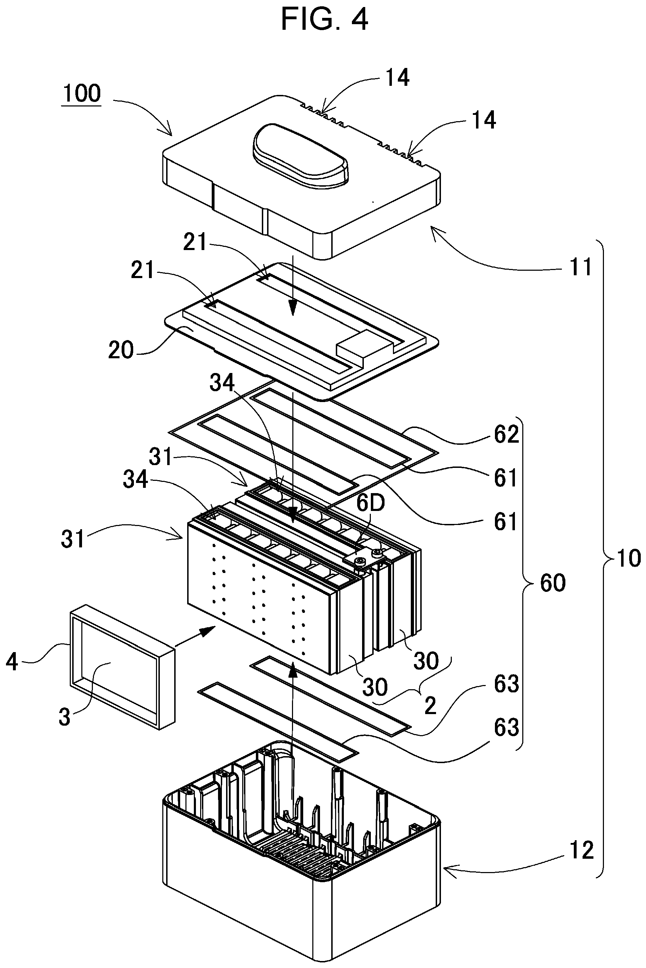

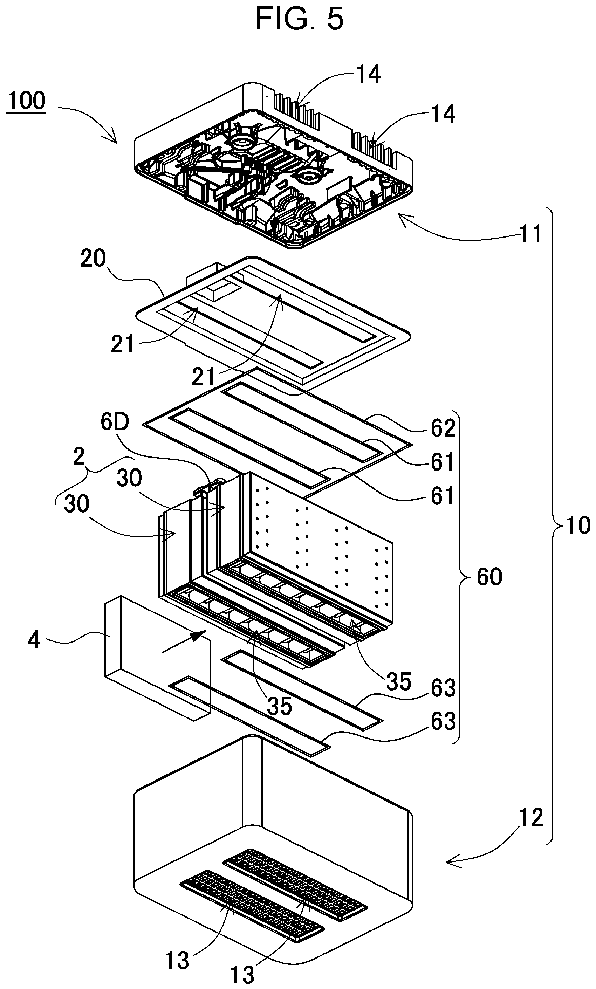

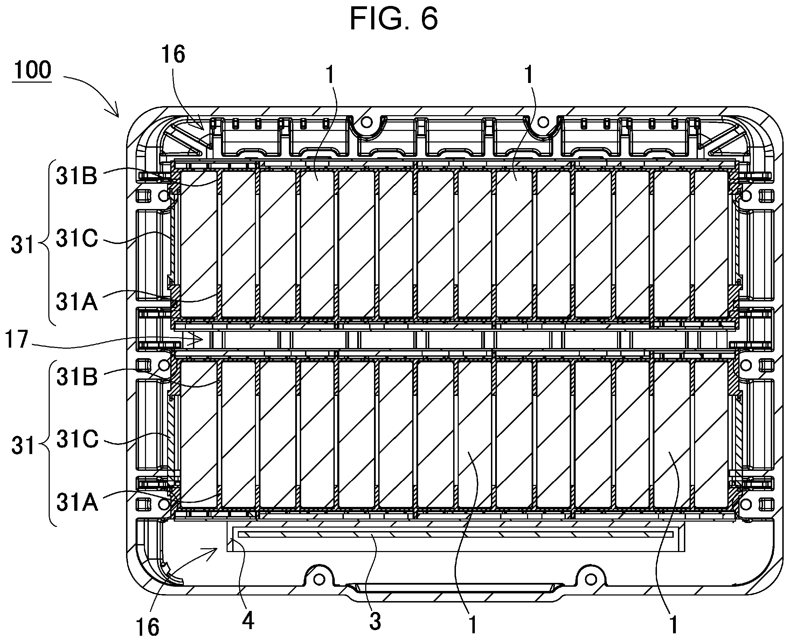

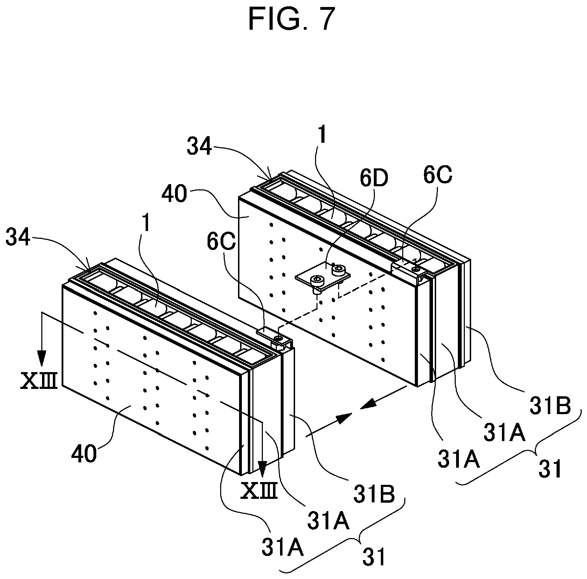

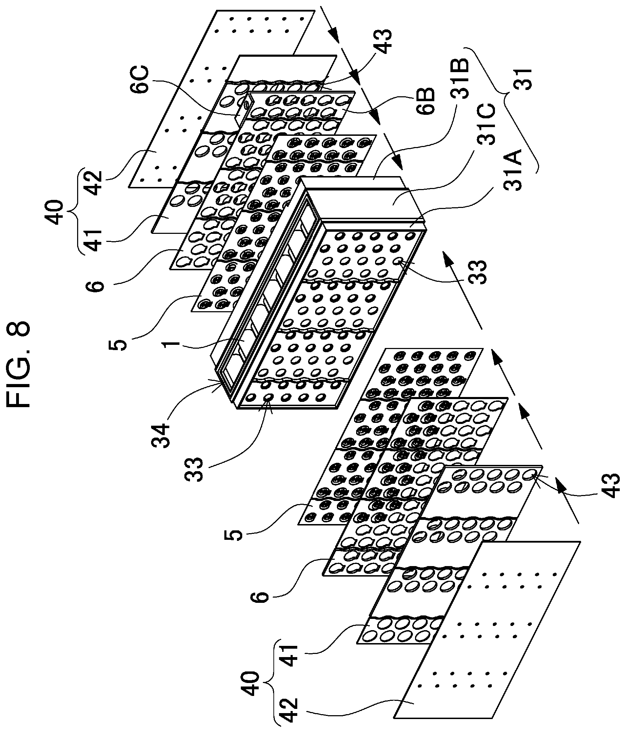

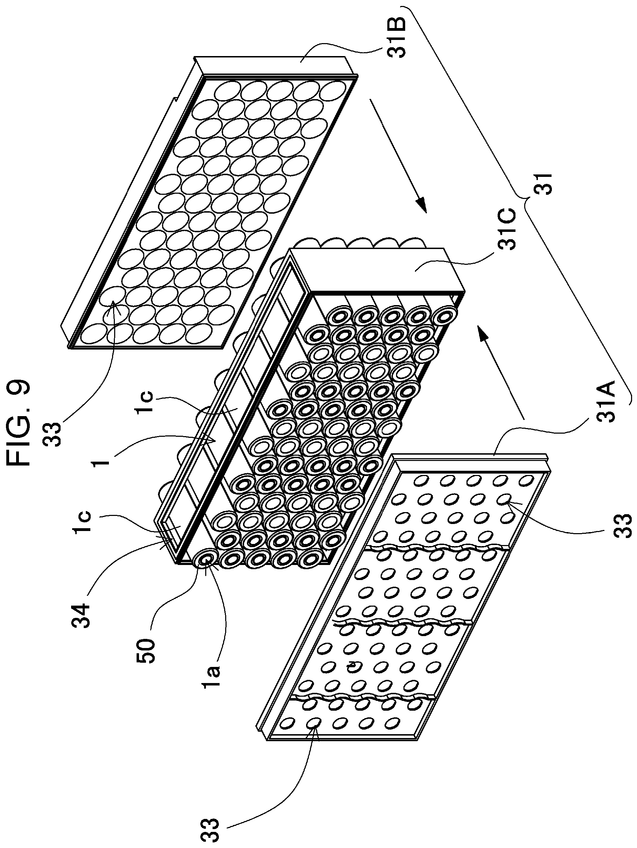

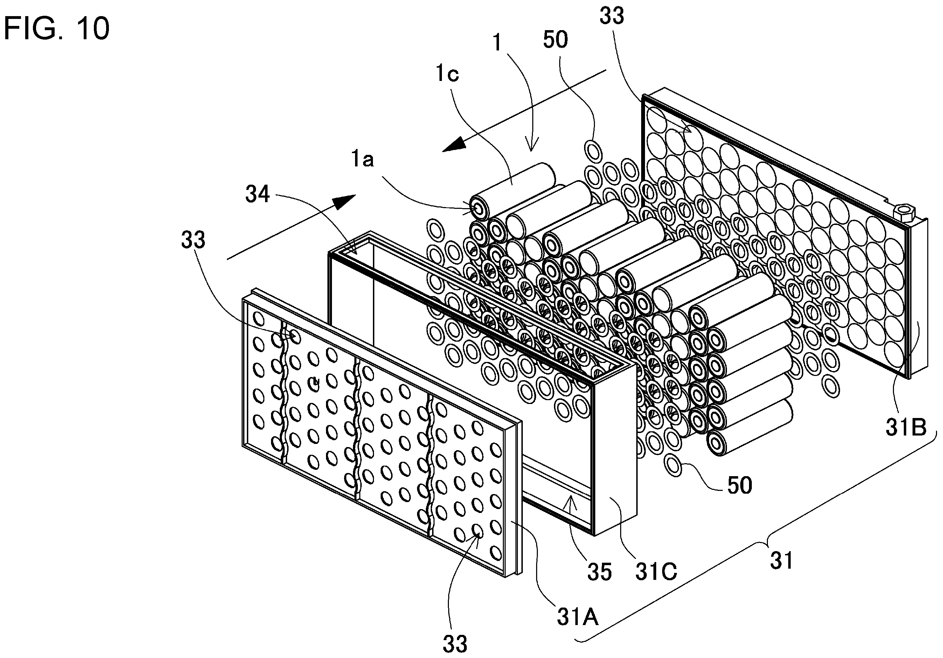

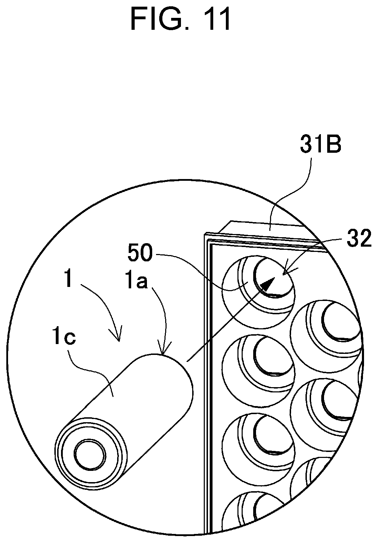

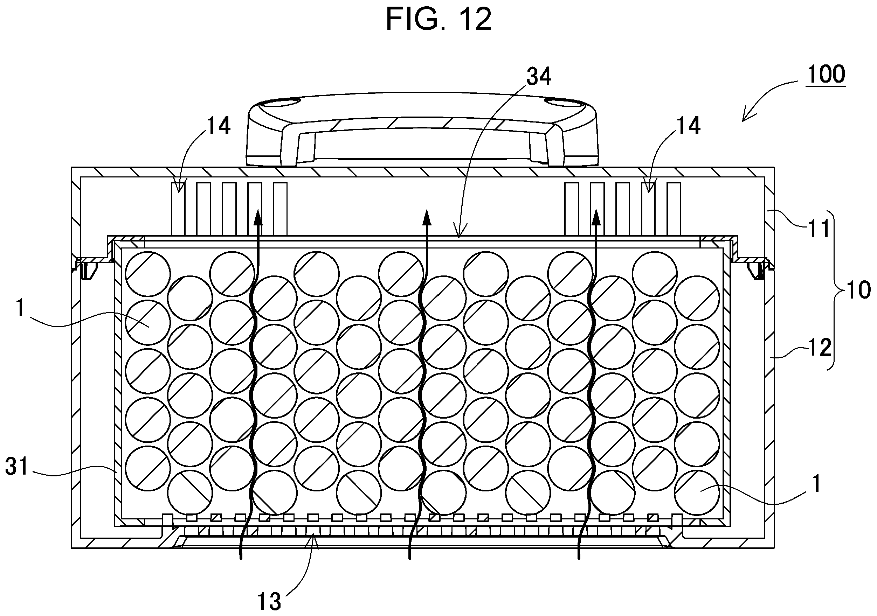

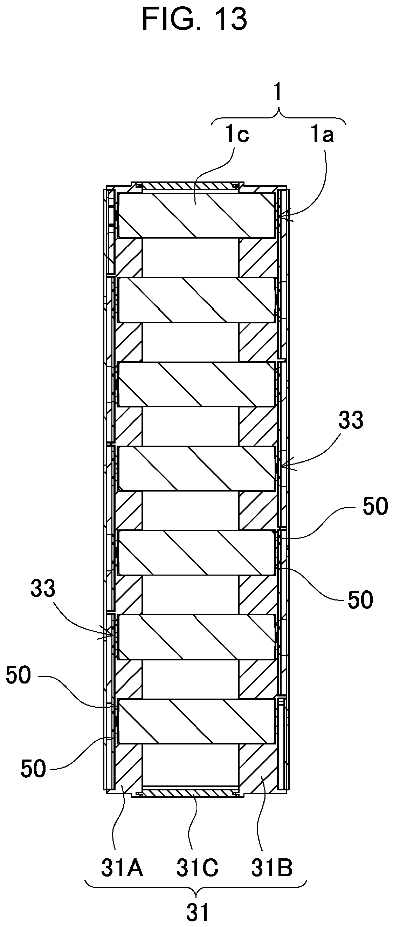

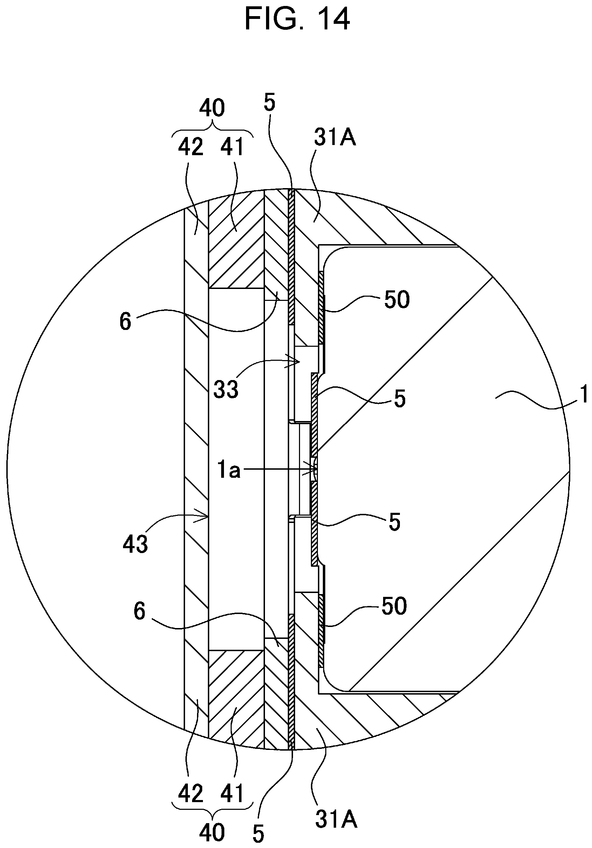

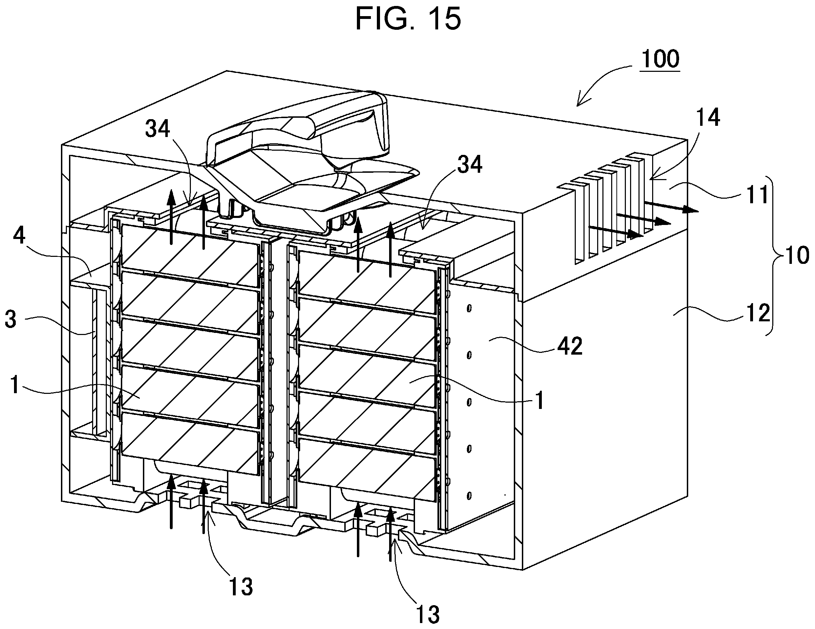

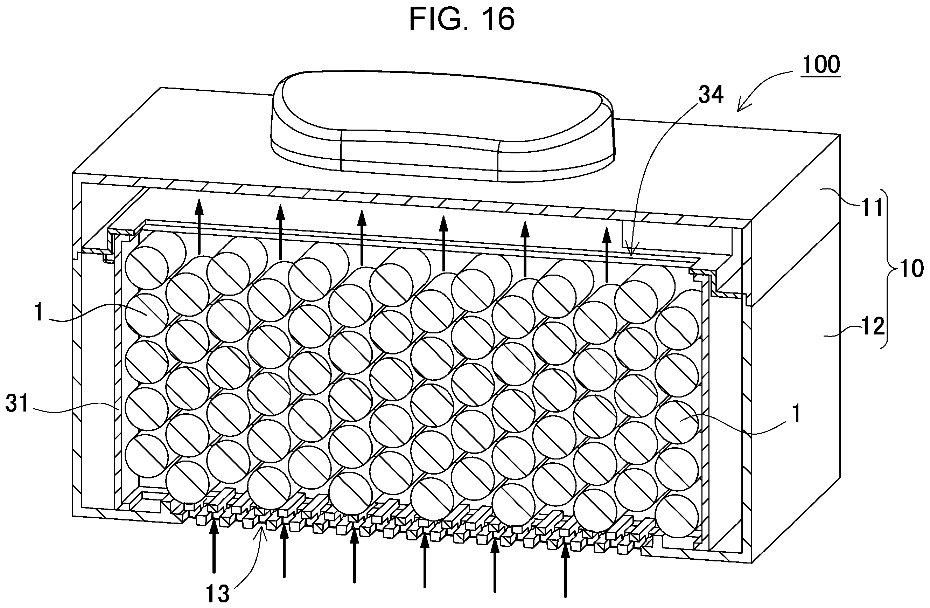

Power supply device 100 according to a first exemplary embodiment of the present disclosure is illustrated in Figs. 1 to 16. In these drawings, Fig. 1 is a perspective view illustrating power supply device 100 according to the first exemplary embodiment, Fig. 2 is a perspective view of power supply device 100 of Fig. 1 as viewed obliquely from below on a rear side, Fig. 3 is an exploded perspective view in which upper case 11 of power supply device 100 of Fig. 1 is disassembled, Fig. 4 is a further exploded perspective view of power supply device 100 of Fig. 3, Fig. 5 is an exploded perspective view of power supply device 100 of Fig. 2, Fig. 6 is a cross-sectional view taken along line VI-VI of power supply device 100 of Fig. 1, Fig. 7 is an exploded perspective view of battery module 2 of Fig. 4, Fig. 8 is an exploded perspective view in which lead plate 5 is disassembled from one battery block 30 of Fig. 7, Fig. 9 is an exploded perspective view of one holder case 31 of Fig. 8, and Fig. 10 is a further exploded perspective view of holder case 31 of Fig. 9, Fig. 11 is an exploded perspective view illustrating a state where electrode waterproof portion 50 is set in holder side surface case 31B of Fig. 9, Fig. 12 is a cross-sectional view taken along line XII-XII of battery block 30 of Fig. 1, Fig. 13 is a cross-sectional view taken along line XIII-XIII of battery block 30 of Fig. 7, Fig. 14 is an enlarged cross-sectional view of a main part of battery block 30 of Fig. 13, Fig. 15 is a cross-sectional perspective view taken along line XV-XV of power supply device 100 of Fig. 1, and Fig. 16 is a cross-sectional perspective view taken along line XVI-XVI of power supply device 100 of Fig. 1. Power supply device 100 illustrated in these drawings includes exterior case 10, battery module 2, and circuit board 3.

### (Exterior case 10)

Exterior case 10 houses battery module 2 and circuit board 3. As an outer shape of exterior case 10, any shape having a housing space in the inside can be used. In the example illustrated in Figs. 1 to 6, exterior case 10 is formed in a box shape whose appearance is extended in one direction (lateral direction in the drawings). As illustrated in Figs. 3 to 5, box-shaped exterior case 10 includes upper case 11 and lower case 12 obtained by vertically dividing the exterior case into two parts. However, the present disclosure is not limited to this configuration, and the exterior case may be divided into three or more parts. Moreover, the exterior case may be divided into left and right parts.

Exterior case 10 is preferably made of a member having excellent insulation properties, for example, a resin such as polycarbonate, a PC-ABS alloy, and the like. However, the exterior case may be made of a metal member such as aluminum or an alloy thereof. Moreover, an internal space for housing battery module 2 and circuit board 3 is provided inside exterior case 10. In the example illustrated in Figs 5 to 6 and the like, an internal space is formed in lower case 12 to house battery module 2 and circuit board 3. A portion of an internal housing space in which battery block 30 and circuit board 3 of battery module 2 are arranged is waterproofed by battery waterproof portion 60, and waterproof space 16 having a waterproof structure is provided between an inner surface of exterior case 10 and an outer surface of battery block 30 inside exterior case 10.

### (Partition portion 20)

Moreover, partition portion 20 is arranged on an upper surface of battery module 2. Partition portion 20 is installed at an opening end in an upper portion of lower case 12, and battery module 2 and circuit board 3 are housed in an internal space of lower case 12 of exterior case 10 defined by partition portion 20. Partition opening 21 is provided in partition portion 20. In the example of Fig. 3, two partition openings 21 are formed in partition portion 20. A part of battery module 2 is exposed from each partition opening 21. As a result, battery module 2 partially communicates with an outside, and cooling air can be introduced into or discharged from battery module 2.

Further, in exterior case 10, external first opening 13 and external second opening 14 are formed in a part thereof. External first opening 13 and external second opening 14 communicate with a cooling air path. In the example illustrated in Figs. 2 and 5, external first opening 13 is opened in a bottom surface of exterior case 10, and external second opening 14 is opened on an upper side of a rear surface of exterior case 10 (details will be described later).

Moreover, in order to cool a plurality of secondary battery cells 1 housed in each battery block 30 constituting battery module 2, as illustrated in Figs. 4 to 5, 7 to 10, and the like, holder upper opening portion 34 is opened on an upper surface of holder case 31 constituting each battery block 30, and holder lower opening portion 35 is opened on a lower surface of holder case 31. Holder upper opening portion 34 communicates with external first opening 13 of exterior case 10, and holder lower opening portion 35 communicates with external second opening 14 (details will be described later).

### (Battery module 2)

Battery module 2 is also referred to as a core pack or the like, and houses the plurality of secondary battery cells 1. Moreover, battery module 2 may include a plurality of battery blocks 30, and the plurality of secondary battery cells 1 may be housed in each battery block 30. In the example of Figs. 4, 6, 7, and the like, two battery blocks 30 are stacked to constitute battery module 2.

### (Holder case 31)

Each battery block 30 includes holder case 31, secondary battery cell 1, and lead plate 5. Holder case 31 has a box-shaped outer shape as illustrated in Fig. 8. A holder housing space is formed inside holder case 31, and the plurality of secondary battery cells 1 are housed in the holder housing space. Moreover, holder case 31 in Fig. 9 and the like is divided into three parts, and left and right holder side surface cases 31A and 31B and intermediate holder intermediate case 31C are joined. However, the holder case is not limited to a structure in which the holder case is divided into three parts, and may be divided into four or more parts, or two parts. A space between the divided holder cases is waterproofed by a waterproof structure. Holder case 31 is made of a material having excellent insulation properties. Preferably, the holder case is made of resin such as polycarbonate or a PC-ABS alloy.

### (Case cylindrical portion 32)

Moreover, in holder case 31, case cylindrical portion 32 that covers an end region of secondary battery cell 1 is formed on an inner surface side of holder side surface cases 31A and 31B. In the example illustrated in Figs. 9 to 11 and the like, cylindrical case cylindrical portion 32 is integrally formed with holder case 31 at a position corresponding to each end region of secondary battery cell 1 on an inner surface side of holder case 31.

### (Lead plate 5)

Moreover, battery block 30 includes lead plate 5 for electrically connecting secondary battery cells 1 to each other. Lead plate 5 is preferably arranged on an outer surface side of holder case 31. Moreover, in holder case 31, electrode window 33 communicating with case cylindrical portion 32 is opened on a side surface in order to connect lead plate 5 arranged on the outer surface side to a terminal of secondary battery cell 1.

Each lead plate 5 connects electrodes of cell end faces 1a of secondary battery cells 1 to connect the plurality of secondary battery cells 1. Lead plate 5 is made of a metal plate having excellent conductivity, such as an aluminum plate, a nickel plate, or a copper plate. The plurality of secondary battery cells 1 are connected in series or in parallel via lead plates 5. The number of series connections and the number of parallel connections can be arbitrarily set according to required specifications. In the example of Fig. 8 and the like, end surfaces of 10 secondary battery cells 1 are mainly connected to each lead plate 5, and a total of 70 secondary battery cells 1 are used in one battery block 30 to form 7 series × 10 parallel. Moreover, in the example of Fig. 4, two battery blocks 30 are stacked in a longitudinal direction of secondary battery cells 1, these battery blocks 30 are connected in series, and a total of 140 secondary battery cells 1 are arranged in 14 series × 10 parallel. However, the number and connection form of the secondary battery cells, that is, the number in series and the number in parallel are not limited to this configuration.

### (Bus bar 6)

Moreover, bus bars 6 are used as necessary for connection between lead plates 5. In the example of battery block 30 illustrated in the exploded perspective view of Fig. 8, bus bars 6 are arranged on and connected to surfaces of lead plates 5 to implement 7 series × 10 parallel. Moreover, bus bar 6B positioned at an end exposes connection piece 6C of the total output on the upper surface of holder case 31. In the examples of Figs. 4 and 7, connection pieces 6C of two battery blocks 30 are connected to each other by second bus bar 6D. By adding not only lead plates 5 but also bus bars 6 in this manner, heat generation can be suppressed even though a current value increases. Note that, although lead plate 5 and bus bar 6 are configured as separate components in the present exemplary embodiment, the bus bar can be omitted by providing a lead plate with a function of the bus bar depending on the current value.

Note that, in this example, an example is illustrated in which the secondary battery cells are held in a posture in which positive electrodes and negative electrodes alternately appear on cell end faces 1a of stacked secondary battery cells 1. Moreover, preferably, the positive electrodes are arranged not to face each other between adjacent battery blocks 30. With such an arrangement, in a case where cell end face 1a on the positive electrode side of secondary battery cell 1 is provided with a gas release valve that opens when an internal pressure becomes high, even though a high-temperature and high-pressure gas is released from one secondary battery cell 1 by any chance, the other secondary battery cell 1 is not arranged on the side facing cell end face 1a, in other words, cell end faces 1a not provided with the gas release valve are arranged in a posture facing each other. As a result, safety can be enhanced.

### (Insulating sheet 40)

Further, insulating sheet 40 may be added in order to insulate a region where lead plate 5 and bus bar 6 are exposed on each end surface of holder case 31. Insulating sheet 40 may include a single sheet, or may include a plurality of sheets. In the example of Fig. 8, first insulating sheet 41 and second insulating sheet 42 are stacked as insulating sheet 40 on a surface of bus bar 6. First insulating sheet 41 stacked on bus bar 6 forms an opening window 43 in which a portion corresponding to cell end face 1a is opened. On the other hand, second insulating sheet 42 stacked on first insulating sheet 41 closes opening windows 43.

### (Circuit board 3)

Battery block 30 is connected to circuit board 3 via lead plate 5 and bus bar 6. On circuit board 3, a charge and discharge circuit for charging and discharging secondary battery cell 1, a protection circuit for monitoring voltage and temperature of secondary battery cell 1 and stopping current at the time of abnormality, and the like are mounted. Circuit board 3 includes a glass epoxy substrate or the like. Moreover, board holder 4 may be arranged as a member for holding circuit board 3.

### (Secondary battery cells 1)

As illustrated in Figs. 6, 8, 12 to 14 and the like, each battery block 30 houses secondary battery cells 1 in holder case 31. A secondary battery cell having a cylindrical or prismatic outer shape can be used as each secondary battery cell 1. In the examples illustrated in Fig. 6 and the like, cylindrical secondary battery cells 1 are arranged and used in a staggered manner in a horizontal orientation. Note that the number and arrangement of secondary battery cells 1 are not limited to this example, and any number and arrangement can be appropriately adopted. For example, the cylindrical secondary battery cells may be arranged in a matrix. For secondary battery cell 1, a known secondary battery such as a lithium ion secondary battery, a nickel metal hydride battery, or a nickel cadmium battery can be appropriately used.

Each secondary battery cell 1 has positive and negative electrodes. A positive-electrode or negative-electrode terminal is preferably provided on one cell end face 1a of secondary battery cell 1. In the example of Figs. 6 and 8, and the like, the positive-electrode terminal is provided on one cell end face 1a of secondary battery cell 1, and another surface of an exterior can serve as a negative electrode. Moreover, in this example, an example is illustrated in which the secondary battery cells are held in a posture in which the positive electrodes and the negative electrodes alternately appear on the cell end faces of the stacked secondary battery cells. However, each secondary battery cell 1 may be held by battery block 30 in a posture in which the positive electrodes or the negative electrodes of all secondary battery cells 1 are on the same side.

Moreover, the gas release valve is provided on one cell end face 1a of the exterior can of each secondary battery cell 1. The gas release valve is opened in response to an increase in an internal pressure of the exterior can, and releases gas inside the exterior can to the outside. Such a gas release valve is provided, for example, on a positive electrode side of secondary battery cell 1.

### (Holder upper opening portion 34)

Moreover, each holder case 31 has holder upper opening portion 34 and holder lower opening portion 35 on the upper surface and the lower surface, respectively. As illustrated in the cross-sectional views of Figs. 12, 15, and 16, the cooling air can be introduced into holder case 31 through holder upper opening portion 34 and holder lower opening portion 35 opened vertically in holder case 31, and discharged after heat exchange. Moreover, by opening holder upper opening portion 34 and holder lower opening portion 35 on facing surfaces of holder case 31, it is possible to allow the cooling air to flow linearly and smoothly.

Each holder upper opening portion 34 and holder lower opening portion 35 are preferably extended in a direction intersecting the longitudinal direction of secondary battery cell 1. As a result, holder upper opening portion 34 and holder lower opening portion 35 are opened in a direction in which secondary battery cells 1 are stacked, and many secondary battery cells 1 are exposed from holder case 31. As a result, heat dissipation performance can be improved.

Moreover, in the example of Fig. 10, holder case 31 is divided into three parts, and holder upper opening portion 34 and holder lower opening portion 35 are opened in holder intermediate case 31C in the middle. Holder intermediate case 31C is formed in a frame shape, and opens a side surface of a long side and closes a side surface of a short side. Note that a plurality of holder upper opening portions and a plurality of holder lower opening portions may be formed on the upper surface and the lower surface of the holder case, respectively.

Further, holder upper opening portion 34 opened in the upper surface of holder case 31 communicates with partition opening 21 of partition portion 20. Moreover, holder lower opening portion 35 opened in the lower surface of holder case 31 communicates with external second opening 14 of exterior case 10.

### (Cooling air path)

In each battery block 30, the cooling air path through which the cooling air flows is formed between an inner surface of battery block 30 and a surface of cell intermediate region 1c between end regions connected to cell end face 1a in each secondary battery cell 1. The cooling air path is formed, inside holder case 31, in a gap between an inner surface of holder case 31, that is, a path between a path between holder lower opening portion 35 and holder upper opening portion 34 of holder intermediate case 31C and a surface of secondary battery cell 1 or between adjacent secondary battery cells 1. Moreover, in exterior case 10, external first opening 13 and external second opening 14 communicating with the cooling air path are formed. With such a configuration, the cooling air is taken in from an outside by the cooling air path, and the cooling air flows in the path between holder lower opening portion 35 and holder upper opening portion 34 of holder intermediate case 31C. As a result, a gap is secured between cells in holder case 31, and the cooling air directly flows to a side surface of each secondary battery cell 1 installed in the form of piled bales. Accordingly, it is possible to efficiently perform heat exchange and achieve cooling.

In the example illustrated in Figs. 13 to 15 and the like, cell intermediate regions 1c other than the terminals of secondary battery cells 1 are exposed inside holder case 31. Moreover, holder case 31 has holder upper opening portion 34 and holder lower opening portion 35 that communicate with the cooling air path. Holder upper opening portion 34 communicates with external second opening 14. Moreover, holder lower opening portion 35 communicates with external first opening 13. With such a configuration, the cooling air flows over a surface of cell intermediate region 1c of secondary battery cell 1, and secondary battery cell 1 can be efficiently cooled.

In exterior case 10, external first opening 13 and external second opening 14 are opened. The cooling air is taken in from external first opening 13, introduced into exterior case 10, subjected to heat exchange inside exterior case 10, and discharged from external second opening 14. For example, a fan or the like is provided to forcibly allow the cooling air to flow. External first opening 13 and external second opening 14 are preferably provided on different surfaces of exterior case 10 such that the cooling air can be smoothly taken into and discharged from exterior case 10. In the example illustrated in Fig. 2, external first opening 13 is opened on the bottom surface of exterior case 10, and external second opening 14 is opened on the upper side of the rear surface of exterior case 10. Note that, in the present disclosure, as illustrated in Figs. 12, 15, 16, and the like, an example in which the cooling air is taken in from external first opening 13 and discharged from external second opening 14 has been described. However, the present disclosure is not limited to this configuration, and it goes without saying that the cooling air may be taken in from the external second opening and discharged from the external first opening.

External first opening 13 and external second opening 14 may be opened in a plurality of slit shapes in addition to being opened in a rectangular shape. As a result, a total opening area can be increased by forming a plurality of slits while narrowing an opening of each slit to suppress entry of a foreign matter. In the examples of Figs. 2, 5, and the like, external first opening 13 is opened in a mesh shape, and external second opening 14 has a slit shape.

External first opening 13 is opened at a position corresponding to holder lower opening portion 35 of battery block 30 housed in exterior case 10. As a result, the cooling air path is exposed from exterior case 10 through external first opening 13 and holder lower opening portion 35 opened in the lower surface of holder case 31. As a result, cell intermediate region 1c of secondary battery cell 1 housed in holder case 31 can be efficiently cooled by fresh cooling air introduced into exterior case 10 through external first opening 13 and holder lower opening portion 35. In the example illustrated in Fig. 2, the cooling air is introduced into cell intermediate region 1c of secondary battery cell 1 on a bottom surface of holder case 31 from a lower surface by external first opening 13 opened on the bottom surface of exterior case 10. As illustrated in Figs. 12 and 15 to 16, the cooling air flows along the cooling air path in battery block 30 while traveling along the cooling air path, and flows to an upper surface of battery block 30 while exchanging heat with secondary battery cell 1. Then, the air is guided to an upper portion of exterior case 10, that is, the inside of upper case 11 in Figs. 12, 15, and 16, through holder upper opening portion 34 opened in the upper surface of holder case 31 and partition opening 21 of partition portion 20, and then discharged through external second opening 14 opened above the rear surface of exterior case 10. In this way, the cooling air flows inside exterior case 10 through the cooling air path, and an intermediate portion of secondary battery cell 1 housed in battery block 30 can be directly cooled.

### (Electrode waterproof portion 50)

On the other hand, power supply device 100 includes electrode waterproof portion 50 that is interposed between each battery block 30 and cell end face 1a of each secondary battery cell 1 and waterproofs the electrode from the cooling air path. By joining holder side surface cases 31A and 31B to holder intermediate case 31C by electrode waterproof portions 50 on cell end faces 1a of secondary battery cells 1, outer surface sides of holder side surface cases 31A and 31B from opening portions of electrode waterproof portions 50 that expose cell end face 1a electrodes of secondary battery cells 1 through electrode windows 33 of holder side surface cases 31A and 31B have a waterproof structure. With such a configuration, it is possible to waterproof the electrode by electrode waterproof portion 50 provided between cell end face 1a of secondary battery cell 1 and battery block 30 while performing cooling by flowing the cooling air to cell intermediate region 1c of secondary battery cell 1, and it is possible to maintain a necessary waterproof structure while opening external opening portion 15 in exterior case 10 for cooling.

In the structure in which cooling air flows into the exterior case and cooling is performed by air cooling, an opening is inevitably provided in the exterior case to secure a flow path of air. On the other hand, in order to prevent the unintended short circuit of the secondary battery cell housed inside the exterior case, a waterproof structure for protecting the battery block housing each secondary battery cell from external water or the like is required. As described above, since it is necessary to waterproof the secondary battery cell housed inside while providing the opening in the exterior case, a complicated structure has been required. On the other hand, in power supply device 100 according to the present exemplary embodiment, as described above, while electrode waterproof portion 50 ensures the waterproofness of an electrical connection portion of secondary battery cell 1, cell intermediate region 1c of secondary battery cell 1 is exposed to the cooling air path to directly exchange heat. As a result, efficient cooling is achieved.

As illustrated in Figs. 9 and 11, electrode waterproof portion 50 is preferably formed in an annular shape. As a result, by arranging the electrode inside the annular shape, the electrode can be exposed from battery block 30 through electrode window 33 as illustrated in Fig. 8. As described above, in battery block 30, electrode windows 33 through which the electrodes are exposed are formed at positions facing cell end faces 1a. With respect to such battery block 30, as illustrated in the cross-sectional view of Fig. 14, one surface of electrode waterproof portion 50 is fixed to a periphery of electrode window 33 in case cylindrical portion 32 of battery block 30. Moreover, the other surface of electrode waterproof portion 50 is fixed to cell end face 1a. At this time, the electrode on cell end face 1a is positioned to be exposed from the opening portion of annular electrode waterproof portion 50. As a result, while electrode waterproof portion 50 is fixed between cell end face 1a of secondary battery cell 1 and battery block 30, the electrode can be exposed as illustrated in Fig. 8 and the like to achieve electrical connection with lead plate 5 and bus bar 6. Such electrode waterproof portion 50 can include a waterproof double-sided tape.

### [Method for manufacturing power supply device]

Here, an example of a method for manufacturing power supply device 100 including electrode waterproof portion 50 will be described. First, each of battery blocks 30 in which electrode windows 33 for exposing the electrodes of the plurality of secondary battery cells 1 are formed is prepared.

Next, electrode waterproof portion 50 is fixed between cell end face 1a and electrode window 33 of each battery block 30 in each secondary battery cell 1, and the electrode is exposed from electrode window 33. Note that, as illustrated in Fig. 11, electrode waterproof portion 50 is set in case cylindrical portion 32 of holder side surface case 31B constituting holder case 31 in advance, and the end of secondary battery cell 1 is pushed into case cylindrical portion 32 in this state. As a result, electrode waterproof portion 50 can be attached to a periphery of the electrode on cell end face 1a. Alternatively, as illustrated in Fig. 9, in a state where electrode waterproof portion 50 is attached to cell end face 1a of secondary battery cell 1 previously inserted into holder intermediate case 31C, holder side surface cases 31A and 31B may be joined to holder intermediate case 31C so as to be attached to the inner surface of the cell cylindrical portion.

Subsequently, lead plate 5 is connected to the electrode through electrode window 33. Further, at least one battery block 30 are housed in exterior case 10, and a cooling air path for allowing cooling air to flow, which is formed between the inner surface of each battery block 30 and the surface of cell intermediate region 1c between the end regions connected to cell end face 1a in each secondary battery cell 1, is communicated with external opening portion 15 formed in exterior case 10. As a result, the electrode can be waterproofed by electrode waterproof portion 50 provided between cell end face 1a of secondary battery cell 1 and battery block 30 while cooling air is allowed to flow in cell intermediate region 1c of secondary battery cell 1, and a necessary waterproof structure can be maintained while external opening portion 15 is opened in exterior case 10 for cooling.

### (Battery waterproof portion 60)

Further, power supply device 100 includes battery waterproof portion 60 for waterproofing battery block 30 housed in exterior case 10 while providing an opening for allowing the cooling air to flow inside exterior case 10. With battery waterproof portion 60, it is possible to avoid a situation where water or the like enters the inside of exterior case 10 through the opening of partition portion 20 provided in exterior case 10 or a gap around the opening.

As a specific configuration of battery waterproof portion 60, first sealing portion 61 is arranged between partition portion 20 and battery module 2 around each partition opening 21 as illustrated in Fig. 4 and the like. As a result, a waterproof structure that waterproofs a portion of battery module 2 other than a portion exposed through partition opening 21 is implemented.

Each first sealing portion 61 is formed in an annular shape slightly larger than partition opening 21. In the example of Fig. 4, each of first sealing portions 61 provided along each partition opening 21 is formed in a rectangular shape. As a result, a waterproof structure that waterproofs a portion of battery module 2 other than a portion exposed through partition opening 21 is implemented.

Moreover, a space between a periphery of partition portion 20 and lower case 12 of exterior case 10 is also waterproofed by second sealing portion 62. As a result, a portion indicated by a broken line in Fig. 3 can be made a waterproof structure, and a portion other than cell intermediate region 1c of secondary battery cell 1 can be waterproofed. Holder upper opening portion 34 of each battery block 30 is exposed from partition opening 21, and second sealing portion 62 prevents water or the like from entering lower case 12 through a gap between a periphery of partition opening 21 and battery block 30.

Further, on a bottom surface of power supply device 100, battery waterproof portion 60 is also provided between the bottom surface of battery block 30 and external first opening 13 of lower case 12. Specifically, as illustrated in the exploded perspective view of Fig. 5, third sealing portion 63 is arranged around external first opening 13 on an inner surface of lower case 12. Third sealing portion 63 constitutes an opening waterproof structure that is provided between a periphery of external first opening 13 and a periphery of holder lower opening portion 35 of battery block 30 and waterproofs battery block 30. With such a configuration, it is possible to prevent the unintended short circuit of secondary battery cell 1 in battery block 30 by opening external first opening 13 in a part of exterior case 10 and waterproofing external first opening 13 and battery block 30 while performing cooling by introducing the cooling air into exterior case 10.

As described above, the waterproof structure between exterior case 10 and holder case 31 is achieved by the waterproofing by each first sealing portion 61 other than a portion exposed at partition opening 21 of battery module 2, the waterproofing by second sealing portion 62 between the periphery of partition portion 20 and lower case 12 of exterior case 10, and the waterproofing by third sealing portion 63 between a bottom surface of battery block 30 and external first opening 13 of lower case 12.

Moreover, as described above, the outer surface side of each of holder side surface cases 31A and 31B has a waterproof structure through electrode window 33 of each of holder side surface cases 31A and 31B from the opening portion of electrode waterproof portion 50, through which cell end face 1a electrode of secondary battery cell 1 is exposed.

Therefore, waterproof space 16 is formed between the inner surface of exterior case 10 inside exterior case 10 and the outer surface of battery block 30, and the electrode of cell end face 1a of each secondary battery cell 1 between battery blocks 30 is waterproof space 17.

As first sealing portion 61, second sealing portion 62, and third sealing portion 63, a known member that can exhibit waterproofness can be appropriately used, and for example, a waterproof double-sided tape, a packing, an O-ring, or the like can be used. The same material or structure may be used for first sealing portion 61, second sealing portion 62, and third sealing portion 63, or different materials or structures may be used.

Moreover, according to such a waterproof structure, circuit board 3 can also be waterproofed. That is, circuit board 3 is arranged to be isolated from the cooling air path for flowing the cooling air, which is provided between external first opening 13 and external second opening 14, and thus, circuit board 3 can also be waterproofed by the waterproof structure. In the example illustrated in Figs. 6, 15, and the like, circuit board 3 is arranged between battery block 30 and the inner surface of exterior case 10. As a result, in addition to the short circuit of the terminal of secondary battery cell 1, it is possible to effectively prevent unintended conduction of circuit board 3.

Moreover, in the above configuration, an example in which lead plate 5 is connected to each of the cell end faces on both sides of secondary battery cell 1 to electrically connect with the positive and negative electrodes has been described. However, the present disclosure is not limited to this configuration, and the lead plate may be connected to positive and negative electrodes on one cell end face side. For example, in a configuration in which the positive electrode is provided at the center of one cell end face and the negative electrode is provided therearound, electrical connection with the positive and negative electrodes can be performed only with the cell end face. In this case, it is sufficient that only one cell end face is waterproofed by the electrode waterproof portion. In other words, the other cell end face does not need to be waterproof.

In the above example, the power supply device is attached to an electric device to be driven and supplies power to the electric device. In a case where remaining capacity of the power supply device becomes small or the power supply device degrades over time, the power supply device can be replaced and the electric device can be continuously used. However, the present invention is not limited to a replaceable power supply device mainly housing a secondary battery cell, and can also be applied to a mode in which a secondary battery cell is housed in a housing of an electric device. In the present disclosure, the power supply device only needs to house a secondary battery cell in a case, and the power supply device also includes one in which a secondary battery cell for driving is incorporated in a housing of an electric device itself. That is, the present invention is not limited to a replaceable power supply device, and can also be applied to an electric device incorporating a secondary battery cell.

### INDUSTRIAL APPLICABILITY

The power supply device and the method for manufacturing the power supply device according to the present disclosure can be suitably used as a power source for driving a power-assisted bicycle, a power source for driving a self-propelled robot for home delivery, an electric cart for home delivery and a golf course, an electric scooter, a construction machine, and a vehicle such as a hybrid vehicle and an electric vehicle. Moreover, the power supply device can also be appropriately used as a power source or the like for portable electric devices such as a wireless device, an electric cleaner, and an electric tool. Moreover, the power supply device can also be applied to a cooling mechanism of an electric device incorporating a heating element without limitation to a power source. Alternatively, the power supply device can also be used for a stationary power storage device, for example, a power supply device for home, business, or factory, a backup power source of a server, or the like.

### REFERENCE MARKS IN THE DRAWINGS

100: power supply device
1: secondary battery cell
1a: cell end face
1c: cell intermediate region
2: battery module
3: circuit board
4: board holder
5: lead plate
6: bus bar
6B: bus bar positioned at end
6C: connection piece
6D: second bus bar
10: exterior case
11: upper case
12: lower case
13: external first opening
14: external second opening
15: external opening portion
16, 17: waterproof space
20: partition portion
21: partition opening
30: battery block
31: holder case
31A: holder side surface case
31B: holder side surface case
31C: holder intermediate case
32: case cylindrical portion
33: electrode window
34: holder upper opening portion
35: holder lower opening portion
40: insulating sheet
41: first insulating sheet
42: second insulating sheet
43: opening window
50: electrode waterproof portion
60: battery waterproof portion
61: first sealing portion
62: second sealing portion
63: third sealing portion

## Claims

1. A power supply device comprising:
a plurality of secondary battery cells each having cell end faces on which electrodes are provided;
one or more battery blocks that house the plurality of secondary battery cells; and
an exterior case that houses the one or more battery blocks,
wherein, in each battery block of the one or more battery blocks, a cooling air path through which cooling air flows is defined between an inner surface of the battery block and a surface of a cell intermediate region of each of the plurality of secondary battery cells housed in the battery block, the cell intermediate region being located between two end regions contiguous with the respective cell end faces,
the exterior case includes an external opening portion that communicates with the cooling air path, and
the power supply device further includes one or more electrode waterproof portions each of which is interposed between the battery block and a corresponding cell end face of a secondary battery cell among the plurality of secondary battery cells housed in the battery block, to prevent water from the cooling air path from reaching a corresponding electrode of the secondary battery cell.

2. The power supply device according to Claim 1, wherein
the battery block includes one or more electrode windows each of which is located at a position facing the corresponding cell end face of the secondary battery cell to expose the corresponding electrode of the secondary battery cell,
the one or more electrode waterproof portions are annular members,
each of the one or more electrode waterproof portions includes
a first face that is fixed to a peripheral portion of the battery block surrounding a corresponding electrode window of the one or more electrode windows, and
a second face that is fixed to the corresponding cell end face of the secondary battery cell in the battery block, and
the corresponding electrode of the secondary battery cell is disposed inside a corresponding one of the annular members, and is exposed through the corresponding electrode window of the battery block.

3. The power supply device according to Claim 2, further comprising:
a lead plate connected to the corresponding electrode through the corresponding electrode window.

4. The power supply device according to Claim 3, further comprising:
a circuit board electrically connected to the plurality of secondary battery cells via the lead plate,
wherein a waterproof space is defined by a waterproof structure between an inner surface of the exterior case and outer surfaces of the one or more battery blocks, and
the circuit board is disposed in the waterproof space to be protected from water ingress.

5. The power supply device according to any one of Claims 1 to 4, wherein the one or more electrode waterproof portions each include a waterproof double-sided tape.

6. The power supply device according to any one of Claims 1 to 4, wherein
each of the one or more battery blocks includes a holder upper opening portion that communicates with the cooling air path, and
the holder upper opening portion communicates with the external opening portion.

7. The power supply device according to any one of Claims 1 to 4, wherein
the exterior case includes a partition portion that holds the one or more battery blocks inside the exterior case,
the partition portion defines a partition opening that exposes an end of the cooling air path, the partition opening communicating with the external opening portion,
a first sealing portion is provided between a periphery of the partition opening and a periphery of the cooling air path,
a second sealing portion is provided between a periphery of the partition portion and an inner surface of the exterior case,
the exterior case includes, as the external opening portion, an external first opening and an external second opening located in part of a surface of the exterior case, the external first opening allowing the cooling air path to communicate with an outside,
a third sealing portion is provided between a periphery of the external first opening and the periphery of the cooling air path, to waterproof the one or more battery blocks, and
the external second opening communicates with the partition opening.

8. The power supply device according to any one of Claims 1 to 4, wherein
each of the plurality of secondary battery cells includes a cylindrical exterior can,
and
the one or more electrode waterproof portions include, for each of the plurality of secondary battery cells, a pair of electrode waterproof portions respectively fixed to two cell end faces at opposite ends of the cylindrical exterior can.

9. The power supply device according to Claim 7, wherein each of the one or more battery blocks includes divided members, each of which covers a corresponding one of the end regions in each of the plurality of secondary battery cells housed in the battery block.

10. The power supply device according to Claim 7, wherein
the battery block does not cover the cell intermediate region, and
the cell intermediate region is exposed to the cooling air path.

11. The power supply device according to any one of Claims 1 to 4, wherein the one or more battery blocks are a pair of battery blocks arranged adjacent to each other.

12. A method for manufacturing a power supply device that includes
a plurality of secondary battery cells each having cell end faces on which electrodes are provided,
one or more battery blocks that house the plurality of secondary battery cells, and
an exterior case that houses the one or more battery blocks,
the method comprising:
preparing one or more battery blocks, each of which includes one or more electrode windows for respectively exposing the electrodes of the plurality of secondary battery cells;
fixing, in each of the one or more battery blocks, one or more electrode waterproof portions, each electrode waterproof portion being fixed to a portion of the battery block surrounding a corresponding electrode window and to a corresponding cell end face of a secondary battery cell such that a corresponding electrode of the secondary battery cell is exposed through the corresponding electrode window;
connecting a lead plate to the corresponding electrode through the corresponding electrode window; and
housing the one or more battery blocks in the exterior case, and causing a cooling air path through which cooling air flows to communicate with an external opening portion provided in the exterior case, the cooling air path defined, in each battery block of the one or more battery blocks, between an inner surface of the battery block and a surface of a cell intermediate region of each of the plurality of secondary battery cells housed in the battery block, the cell intermediate region being located between two end regions contiguous with the respective cell end faces.
